# EUROPÄISCHE PATENTSCHRIFT

(11) **EP 1 372 126 B1**
(45) Veröffentlichungstag und Bekanntmachung des Hinweises auf die Patenterteilung: **17.09.2008**
(21) Anmeldenummer: 03012000.0
(22) Anmeldetag: 28.05.2003
(51) Int. Cl.: G08G 1/16, G05D 1/02

(54) **Verfahren zur Verwendung der Video-Bildverarbeitung für Fahrerassistenzsysteme**
Method of using the video image processing system for driver assisting systems
Méthode d'utilsation de traitement d'image video pour système d'assistance du conducteur

(30) Priorität: 14.06.2002 DE 10226474
(43) Veröffentlichungstag der Anmeldung: 17.12.2003
(73) Patentinhaber: Bayerische Motoren Werke Aktiengesellschaft, 80809 München (DE)
(72) Erfinder: Prestl, Willibald, Dr., 82223 Eichenau (DE)

(56) Entgegenhaltungen:
- EP-A- 0 488 828
- EP-A- 1 076 276

## Beschreibung

Die Erfindung bezieht sich auf ein Verfahren zur Verwendung der Video-Bilddaten bei einem Bildverarbeitungssystem für Fahrerassistenzsysteme nach dem Oberbegriff des Patentanspruchs 1.

Aus der EP-A-1 076 276 ist ein Verfahren zur Verwendung von Video-Bilddaten bekannt, bei dem durch Daten eines Navigationssystems die aktuelle Position des Fahrzeuges korrigiert wird.

Die EP-A-0 488 828 beschreibt eine Fahrzeugsteuereinrichtung, bei der die beiden Möglichkeiten einer Bestimmung des Straßenverlaufes durch ein Bildverarbeitungssystem oder durch ein Navigationssystem beschrieben werden.

Der Einsatz von Video-Bildverarbeitung im Bereich der Fahrerassistenzsysteme hat in den letzten Jahren stark zugenommen. Im Bereich der Fahrerassistenz als Einparkhilfe ist der Einsatz von Kameras verbreitet. Derartige Systeme sind beispielsweise aus der JP-A-10-283592, JP-A-10-257482, JP-A-6-255423 und der JP-A-57-150044U bekannt.

Die EP-640903 bezieht sich auf ein Verfahren, indem mit Hilfe von Videokameras Spurmarkierungen erkannt werden. Das aus der EP-1074904 bekannte Verfahren zeigt ebenfalls ein Spurerkennungssystem auf, das mit Hilfe einer CCD-Kamera arbeitet. In der EP-1074903 unterstützt das Kamerasystem ein System, das dazu dient, die Spur zu halten.

Die EP 0 740 163 A2 bezieht sich auf eine Vorrichtung zur lokalen Positionserkennung eines Kraftfahrzeugs auf einer Straße. Hier werden unter anderem Bilddaten zur Positionsbestimmung verwendet.

Nachteil dieser genannten Verfahren und Vorrichtungen ist, dass kleine Signalaussetzer des Bildverarbeitungssystems durch die Gegebenheiten der optischen Situation wie zum Beispiel Sauberkeit der Linsen, Blendung der Kamera oder temporäre Verdeckung der Optik entstehen. Dies kann zu Fehlinformationen führen. Um ungewollte Aktionen bei den Fahrerassistenzsystemen zu verhindern, müssen diese, als Folge der eventuellen Fehlinformation, abgeschaltet werden.

Aufgabe der Erfindung ist, die Datenqualität des Bildverarbeitungssystems zu verbessern um ein Abschalten der Fahrerassistenzsysteme zu verhindern.

Diese Aufgabe wird erfindungsgemäß durch ein Verfahren gemäß Anspruch 1 gelöst. Vorteilhafte Weiterbildungen sind die Gegenstände der abhängigen Ansprüche.

Erfindungsgemäß ist erkannt worden, dass sich die Daten eines Navigationssystems, zum Beispiel aus der DE 101 17 237 A1 bekannt, in vorteilhafter Weise zur Verbesserung der Datenqualität einsetzen lassen. Mit Hilfe von Navigationsdatenbasen und der laufenden Extraktion einer auf die eigene Fahrroute bezogene Streckenvorausschau ist der vorrausliegende Streckenverlauf prinzipiell bekannt.

Die durch Signalaussetzer des Bildverarbeitungssystems entstanden Lücken können vorzugsweise für eine bestimmte Zeit oder eine bestimmte Strecke mit den zusätzlichen Daten aus dem Navigationssystem geschlossen werden. Dies führt zu einer deutlichen Verbesserung der Bildverarbeitungsdaten, die für die Fahrerassistenzsysteme und Sicherheitssysteme zur Verfügung gestellt werden. Des weiteren beinhalten die Navigationsdaten Attributdaten über Spuranzahlen, Spurbreite, Aus/-Einfahrtsituationen etc., die direkt oder indirekt Rückschlüsse auf Fahrspurmerkmale zulassen. Diese Daten können dem Bildverarbeitungssystem ebenfalls zur Verfügung gestellt werden.

Als Beispiele können folgende Einsatzmöglichkeiten genannt werden.

Handelt es sich um eine mehrdeutige Situation, können die Bilddaten durch die aus dem Navigationssystem bekannten Attribute plausibel gemacht werden. Die Fahrerassistenzsysteme können sich mit einer höheren Wahrscheinlichkeit auf die Daten verlassen.

Für den Fall von Signalausfällen des Bildverarbeitungssystems kann der ermittelte Spurverlauf anhand des Navigationspolygonzugs fortgeführt werden. Einen weiteren Vorteil bietet dieses System beim Wiederfinden von Spurmerkmalen nach Aussetzern des Bildverarbeitungssystems. Durch vorherbestimmte wesentliche Bildbereiche aufgrund der Navigations- Straßenverlaufsvorschau kann die bildverarbeitungsbasierte Erkennung von Straßenverlaufsmarkierungen unterstützt werden, was sich vorteilhafterweise in einer schnelleren Wiederbereitstellung der bildverarbeitungsbasierten Daten äußert.

Ein weiterer Ansatz ist die Unterstützung von Bildverarbeitungsmethoden, die auf Strassenverlaufsmodellen (z. B. Erkennung von straßenbautypischen Klothoidenverläufen) basieren, durch vorausschauendes Bereitstellen von Modellannahmen und zu erwartenden Modellparameterbereichen. Ferner können Informationen über Sondersituationen wie Kreuzungen, Ein- und Ausfahrten geliefert werden, um fehlerhaften Ergebnissen der modelbasierten Methoden vorzubeugen.

Für welchen Zeitbereich bzw. für welche Strecke die Bilddaten durch die Navigationsdaten ergänzt werden können, ist von der aktuell gegebenen Datengüte der vom Navigationssystem bereitgestellten Daten und den funktionalen Anforderungen der jeweiligen Fahrerassistenz-Funktion abhängig. Die Genauigkeit sowie die Qualität der Daten können als Attribut mit den Navigationsdaten mitgeliefert werden. Im Hinblick auf die Fahrerassistenz-Funktion ist entscheidend, ob es sich zum Beispiel um sicherheitskritische oder komfortorientierte Funktionen handelt, um zu entscheiden, wie lange Signale navigationsgestützt überbrückt werden können. Bei sicherheitskritischen Funktionen ist eine schnelle Reaktion des Systems, wie beispielsweise ein Lenkeingriff, auf Basis aktuell ermittelter Umgebungsdaten unbedingt erforderlich. Es ist zu beachten, dass bei solchen Funktionen die Navigationsdaten nur für eine kurze Zeit die fehlenden Daten aus dem Bildverarbeitungssystem ersetzen dürfen, während dies z.B. bei Komfortfunktionen entsprechend länger möglich ist.

## Patentansprüche

1. Verfahren zur Verwendung der Video-Bilddaten bei einem Bildverarbeitungssystem für Fahrerassistenzsysteme in Kraftfahrzeugen, **dadurch gekennzeichnet, dass** durch Signalaussetzer des Bildverarbeitungssystems fehlende Bilddaten mit Hilfe der Daten eines Navigationssystems und der laufenden Extraktion einer auf die eigene Fahrroute bezogenen Streckenvorausschau ergänzt werden, wobei durch vorherbestimmte wesentliche Bildbereiche aufgrund der Streckenvorschau die bildverarbeitungsbasierte Erkennung von Straßenverlaufsmarkierungen unterstützt wird.

2. Verfahren nach Patentanspruch 1, **dadurch gekennzeichnet, dass** die ergänzenden Daten nur für eine bestimmte Zeit verwendet werden.

3. Verfahren nach Patentanspruch 1 oder 2, **dadurch gekennzeichnet, dass** die ergänzenden Daten nur für eine bestimmte Strecke verwendet werden.

4. Verfahren nach Patentanspruch 2 oder 3, **dadurch gekennzeichnet, dass** die Zeit und die Strecke zum Ergänzen der fehlenden Daten abhängig von der Datengüte des Navigationssystems und/oder der Art der Fahrerassistenz-Funktion sind.

## Claims

1. A method for using video image data in an image processing system for driver assistance systems in motor vehicles, **characterised in that** image data missing through signal failures of the image processing system are supplemented with the aid of data from a navigation system and the running extraction of a route preview based on one's own driving route, the image processing-based recognition of street course markings being assisted by previously determined important image regions on the basis of the route preview.

2. A method according to claim 1, **characterised in that** the supplementing data are only used for a certain time.

3. A method according to claim 1 or 2, **characterised in that** the supplementing data are only used for a certain route.

4. A method according to claim 2 or 3, **characterised in that** the time and the route for supplementing the missing data are dependent on the data quality of the navigation system and/or the type of driver assistance function.

## Revendications

1. Procédé pour utiliser des données d'images vidéo dans un système de traitement d'images dans des systèmes d'assistance de conduite pour des véhicules automobiles,
**caractérisé en ce que**
l'on complète les données d'images manquantes de signaux d'images du système de traitement d'images à l'aide des données d'un système de navigation et par l'extraction continue d'une prévision de trajet rapportée au trajet emprunté, et par des zones d'image essentielles, prédéfinies, par la prévision du trajet, on assiste la détection des marquages de trajet fondée sur le traitement d'images.

2. Procédé selon la revendication 1,
**caractérisé en ce que**
les données en complément ne sont utilisées que pendant une durée déterminée.

3. Procédé selon la revendication 1 ou 2,
**caractérisé en ce que**
les données de complément ne sont utilisées que pour un certain trajet.

4. Procédé selon la revendication 2 ou 3,
**caractérisé en ce que**
le temps et le trajet pour compléter les données manquantes dépendent de la qualité des données du système de navigation et/ou de la nature de la fonction d'assistance du conducteur.
